# EUROPEAN PATENT SPECIFICATION

(11) **EP 1 272 321 B1**
(45) Date of publication and mention of the grant of the patent: **28.04.2004**
(21) Application number: 01908476.3
(22) Date of filing: 06.02.2001
(51) Int. Cl.: B29C 41/08

(54) **A METHOD FOR THE PROCESSING OF ULTRA-THIN POLYMERIC FILMS**
VERFAHREN ZUR VERARBEITUNG VON ULTRADÜNNEN KUNSTSTOFFFOLIEN
PROCEDE DE FABRICATION DE FILMS POLYMERIQUES ULTRA-FINS

(30) Priority: 29.02.2000 NO 20001025
(43) Date of publication of application: 08.01.2003
(73) Proprietor: Thin Film Electronics ASA, 0124 Oslo (NO)
(72) Inventor: NORDAL, Per-Erik, N-1387 Asker (NO); JOHANSSON, Nicklas, S-59041 Rimofrsa (SE)
(74) Representative: Ricker, Mathias, Dr.Dipl.-Chem.
(86) International application number: PCT/NO2001/000040
(87) International publication number: WO 2001/064413

(56) References cited:
- EP-A1- 0 671 219
- EP-A1- 0 729 793
- EP-A2- 0 854 024

## Description

The present invention concerns a method for preparing ultra-thin films of carbon-containing materials, particularly thin films of polymer materials, wherein the films have a thickness of 0.5 µm or less, wherein the films are formed by a depositing of the materials from a liquid phase onto a solid surface, wherein the liquid phase is formed by the material in the molten state or dissolved in a solvent, wherein the deposition takes place in an enclosure, the enclosure for instance being a clean room or a closed cubicle for instance in a manufacturing installation, and wherein the materials are capable of exhibiting ferroelectric and/or electret properties upon a suitable post-deposition processing.

Thin films of ferroelectric polymers, in particular poly(vinylidene difluoride) (PVDF) and copolymers with trifluoroethylene (TrFE), have been the subject of extensive research since their ferroelectric properties were first discovered in the early 1970s. Similarly, a large body of literature exists relating to polymers that exhibit electret properties, which materials also include polymers that are ferroelectric. For a recent review, the reader is referred to, e.g.: H.S.Nalwa (Editor), *Ferroelectric Polymers*. Marcel Dekker, Inc., New York, Basel, Hong Kong, 1995. Oriented organic thin film are also disclosed in EP-A-729 793.

Hitherto, the ferroelectric polymers have been used commercially in sensors and activators that exploit the piezo- and pyroelectric effects in these materials, but these polymers and other classes of polymers with ferroelectric or electret properties are now also being developed for use as memory films in non-volatile data storage devices. In the latter case, data are stored by polarizing a thin film of the polymer in the direction normal to a supporting surface, a logic "1" being represented by, e.g. a polarization vector in the material pointing down towards the supporting surface, and a logic "0" by a polarization vector in the opposite direction. As shall be explained below, data storage applications require polymer films that are extremely thin, typically one to two orders of magnitude thinner than those used in present-day sensors and actuators. Thus, technologies and processes developed by the industry for manufacturing the sensors and actuators are inadequate for the new data storage devices.

Writing of data in a ferroelectric film is achieved by applying an electrical field to the film that exceeds the coercive field E_{c} by a certain margin, in the direction ("up" or "down") corresponding to the logic state that is to be stored. A single bit of information is typically stored in a portion of the film sandwiched between two electrodes in a capacitor-like structure, and the field is set up by connecting the electrodes to a voltage source. Subsequent reading is achieved by re-applying an electric field that exceeds the coercive field, in a predetermined direction (e.g. "up"). Depending on whether the polarization vector in the film is parallel or anti-parallel to the applied field, it will remain unchanged or flip to the opposite direction. In the former case, only a small displacement current is sensed by an external circuit connected to the capacitor. In the latter case, a much larger current flows due to the polarization reversal.

In practical memory devices, single memory cells are arrayed side by side in large numbers, covering film surfaces that may have lateral dimensions of millimeters to centimeters. In order to achieve well-defined uniform operation of all cells in a given memory device, the film must have uniform physical properties across the whole area of memory cells. In the present context, this implies that it must be of uniform thickness, and it must be smooth and free of defects such as pinholes, bubbles and inclusions. A very important requirement for practical devices is that the voltage needed to perform writing and reading of data should be as low as possible. For a given applied voltage across the cell, the field strength in the cell scales inversely proportional to the cell thickness. With representative values for E_{c} in ferroelectric polymers, this implies that film thickness shall be well below 1 µm, typically of the order of 0.1 µm and less.

The above comments that exemplify cases where ultra-thin films are needed shall not be implied to limit the scope of the present invention to ferroelectric materials or applications for data storage. In particular, the present invention shall encompass electrets in general, and any application where reliable manufacturing of such ultra-thin films is required.

The carbon-containing, typically polymeric materials of relevance here can be coated onto surfaces from a melt or a solution by one of several well-known methods, e.g. spin or dip coating, doctor blading, meniscus coating, casting, etc.

In the present context emphasis shall be placed on polymeric materials exhibiting ferroelectric and/or electret behaviour, in particular fluorinated polymers and copolymers such as poly(VDF-TrFE). Until recently, device applications for ferroelectric polymers and a major part of basic research on these materials have involved polymer films of thicknesses well above 1 µm, e.g. in the range 5-30 µm. Such films are easily prepared by spin coating or other solvent- or melt-based techniques. As described above, however, extremely thin films are required for memory applications, ranging in thickness from approximately 0.5 µm and downward to 0.1 µm and below. In this thickness regime, procedures according to known art have proven inadequate for achieving reproducible, high quality thin films.

Coating from solution is of particular interest for a number of reasons, in which case the polymer is dissolved in a suitable solvent, the solution is spread out as a thin film on a substrate, e.g. by spin coating, and the solvent is allowed to evaporate. Standard procedures for casting or spin coating of PVDF and its co-polymers from solution have been described in the literature. Solvents that have been used include methyl ethyl ketone (MEK), acetone, dimethylsulfoxide (DMSO), dimethylacetamide (DMA), dimethylformamide (DMF) and cyclohexanone. Substrates have typically been a rigid inorganic surface such as glass, although flexible metallic or polymeric materials also have been used. Of particular interest for device-oriented applications are substrates containing electrical electrodes that communicate electrically with the thin films. Thus, the physico-chemical conditions for the thin film coating process in device manufacturing shall to a large extent be dictated by the electrode surface, i.e. the electrode material, surface topography, etc. Electrodes may be part of the substrate proper, or they may be in the form of thin conducting films coated onto an insulating substrate, e.g. inorganic films containing Al, Ni, Cu, Pt, Au, Ti, or conducting metal oxides like indium tin oxide (ITO), or organic films based on conducting polymers.

Certain solvents such as methyl ethyl ketone (MEK) have generally yielded acceptable spin coating results for poly(VDF-TrFE) copolymers on most surfaces of relevance, for film thicknesses typical of present-day commercial applications, although it should be pointed out that the crystal size obtained with MEK or acetone is on the micrometer scale which too large when one wants to use submicron lithography to make devices. At thicknesses of the order of 0.1 µm and below, no prior knowledge materials or procedures have been proven to yield consistently high quality ferroelectric polymer films of relevance for device applications. When, e.g., attempting to use MEK or acetone to produce spin coated poly(VDF-TrFE) copolymer films in the sub-0.5 µm thickness range, the resulting films have a very diffuse appearance (light scattering from relatively large crystals) and are full of pinholes. The latter renders them useless for practical applications since the resulting devices are shorted. Moreover, when attempting to use other solvents such as N-methyl-2-pyrrolidone (NMP), DMF or DMSO under standard clean room conditions (relative humidity 40 % and t = 20 °C) the spin coating process fails completely resulting in a incomplete coverage of the surface. As another example, cyclohexanone can be used as solvent in standard clean room conditions for production of poly(VDF-TrFE) copolymer film with thicknesses on the order of and larger than approximately 0.15 µm. However, at lower thicknesses spin-coated films are of inconsistent quality and generally full of pinholes. To our knowledge, there exists no prior art documentation teaching how the choice of solvent alone may guarantee that high quality films can be reproducibly manufactured in the thickness regime of approximately 0.1 µm and below.

In view of the short-comings with the above-mentioned prior art, the major object of the invention to provide a method that allows the deposition of high-quality ultra-thin films of a carbon-containing material, particularly ferroelectric and/or electret polymer films, on a variety of device-relevant substrates.

Another object of the invention is to provide a method that allows scaling to industrial relevant volumes in the production of such thin film.

Finally there is a specific object of the invention that the thin film deposited has a uniform thickness and a low degree of topographic surface blemishes such as bumps, pits and pin holes; or bubbles.

The above-mentioned objects are achieved according to the invention with a method which is characterized by maintaining a total humidity content in the enclosure corresponding to a relative humidity of less than 50% in a volume of air equal to the volume of the enclosure and the air being at the pressure of one atmosphere, by excluding and/or removing water and water vapour from at least one of the following: the liquid phase, the solid surface, and a free volume of the enclosure above the solid surface during the deposition and the post-deposition processing, the maintenance of the total humidity content at any time during the deposition and the deposition processing taking into account the actual water vapour pressure in the enclosure as well as the water content of the liquid phase.

A first advantageous embodiment of the method according to the invention is characterized by removing water from said solid surface prior to the deposition by one or more of the following processes, viz. exposure to elevated temperatures, ion bombardment and flushing with a hygroscopic liquid or gas, the process or processes taking place in a 35% relative humidity atmosphere or vacuum.

Advantageously the enclosure can be evacuated prior to the deposition.

In a second advantageous embodiment according to the invention a controlled low moisture or moisture-free atmosphere is created in the enclosure prior to the deposition. In this connection it is advantageous that the controlled atmosphere contains one or more gases selected among, but not limited thereto, viz. noble gases, nitrogen and carbon monoxide, or that the controlled atmosphere is dehumidified air.

The relative humidity in the controlled atmosphere is less than 35%.

In a third advantageous embodiment according to the invention the partial water vapour pressure at solid surface is maintained below 1280 Pa and preferably below 960 Pa during the deposition and the post-deposition processing.

It is according to the present invention advantageous that the carbon-containing materials mentioned are selected among one of the following materials but not limited thereto, viz. oligomers, polymers, copolymers of vinylidene fluorides (VF, VDF, TrFE and TFE), vinylidene chlorides and vinylidene cyanides, ethylene, ethylene terephtalate, methylmethacrylate, acrylonitrile, vinyl alcohol, ureas, thioureas, urethanes, nylons, polycarbonate, and/or blends thereof.

Finally it is according to the invention advantageous that the deposition is performed by one of the following processes but not limited thereto, viz. spin coating, meniscus coating, dip coating, doctor blading and spray coating

The method according to the invention shall now be explained in greater detail, first with a discussion of the general background of the invention and then with reference to specific and exemplary embodiments of the method according to the invention.

It is a central theme of the invention to maintain low humidity throughout all steps of the coating process. This applies in particular to the moisture content in the atmosphere, if any, in contact with the substrate prior to and during the coating process, but also to avoiding moisture in the solvents and solutes used.

Before proceeding to more explicit descriptions of preferred procedures and materials, a brief rationale shall be given, as follows:

The thin film materials and solvent systems in question here are either:
i) impaired or destroyed in their functionality by uptake of water, or:
ii) strongly affected by the presence of water in their film-forming behaviour on solid surfaces.

Re. i): The functionality of interest in the present context is primarily related to the electrical behaviour of the film materials, in particular the dynamics of polarization (alignment of internal dipoles or trapping of charges) and the long-term polarization retention properties. High electrical resistivity and dielectric strength are critical attributes in this connection, both of which are strongly impaired by the presence of water.

Re. ii): The wetting behaviour of a liquid on a surface is dependent on a very complex interplay between the surface and the liquid, as well as the atmosphere above, if any. When the liquid is a solution, the solvent-solute interaction may be influenced by the other constituents of the total system, and the addition of trace amounts of materials may profoundly affect the film forming properties. Polymeric materials are known to exhibit very complex behaviour in this context (see, e.g.: R. Yerushalmi-Rozen and J. Klein, "Polymer brushes paint a stable picture", Physics World, 1995 August, pp.30-35).

It is a well-established fact that all surfaces that are exposed to normal ambient air adsorb water molecules to some extent, even at relative humidity levels far below the dewpoint (cf., e.g.: H. Lüth, "Surfaces and Interfaces of Solid Materials", Springer 1995). Quantitatively, this water adsorption depends steeply on the relative humidity of the ambient atmosphere, and it is also strongly dependent on the surface material itself as well as on the possible presence of contaminants and other adsorbates.

An important class of materials to be applied as thin films in the present context are ferroelectrics, including primarily PVDF and copolymers of VDF with TrFE and TFE, but also derived substances, e.g. where fluorine atoms are substituted by Cl, CN or other constituents, or where propylene based monomers have been incorporated in the chains. Other families of ferroelectric polymers are of relevance here, e.g. the odd nylons, as well as carbon-containing materials that exhibit electret behaviour without being ferroelectric. Several of these materials are known to be extremely hydrophobic, e.g. the vinylidene fluorides, while others are hygroscopic, e.g. the nylons.

When films are formed from solution, on may note from Section A2 above that the solvents may be strongly hygroscopic.

Introduction of water into the system shall influence the film forming process in several ways, depending on the affinity between the materials involved. Thus water molecules may attach to the surface, solute and solvent and affect the surface tension and wetting properties. Water may be adsorbed on the surface from vapour in the space above it, e.g. ambient air. Similarly, trace amounts of water in the solvent shall compete for attachment area on the substrate, and may also affect the solubility of the polymer. During the spin coating process when the polymer is spread over a large area there is a large surface to volume ratio making the process very sensitive to the presence of water vapour in the volume above the surface, especially when one is using hygroscopic solvents such as DMF, NMP and DMSO and hydrophobic polymers such as the ones mentioned above.

Since the sensitivity to humidity depends on many parameters (solvent and solute chemistry, concentration of solution, temperature, physico-chemical conditions at liquid-substrate interface, etc), the only universally applicable criterion on humidity control is to avoid water all together. In keeping with this, the present invention teaches that the following principles be followed as closely as possible:
- First, employing water-free base materials of high purity. Solvents and polymers should be purged of water and maintained hermetically sealed until use.
- Second, ensure that the receiving surface is clean and free from adsorbed water. This implies a preparation protocol which ends up with a well-defined surface at the stage where the coating process is initiated.
- Third, exclude water vapour throughout the process of coating and subsequent sealing.

In order to avoid picking up water molecules from the surrounding atmosphere prior to and during deposition, one of the following strategies can be adopted:
- Operating under vacuum.
- Operating under an inert water-free atmosphere, e.g. a noble gas or N₂.
- Operating in ambient air that has been purged of water.

As stated, these strategies are "ideal" in the sense that complete exclusion of water molecules is in practice unattainable. In order to be useful in industrial manufacturing environments, it is therefore important to state upper limits on humidity, in terms of absolute partial pressure of water vapour or relative humidity, that have been demonstrated to yield reproducible and adequate quality for device-relevant thin films. Therefore, in addition to teaching the basic principles to be observed in the creation of the ultra-thin films in question, the present document also provides quantitative criteria relating to humidity control, cf. below.

The paucity of teachings in the prior art literature on humidity control in the creation of ultra-thin organic films is remarkable, and may possibly be attributed to the fact that coating from melt or solution in this thickness regime is still novel and largely unknown in device manufacturing. Where humidity control is described in the prior art literature, it is not focused on the interaction between the substrate and the film-forming solution or melt, but rather on the chemical and/or physical qualities of the film-forming material itself. In this connection, one may consult, e.g. the following patents: In US patent 5 670 210, R.P.Mandal et al. describe a method of uniformly coating a substrate. While teaching control of the surrounding atmosphere, humidity control is only mentioned incidentally and without specific rationale, the inventive thrust being towards controlling the evaporation rate of the solvent via solvent vapour pressure control. In US patent No. 5 127 362, H. Iwatsu et al. describe a liquid coating device incorporating humidity control. The reason for maintaining controlled humidity is in this case to obtain suitable viscosity for the film-forming liquid and thereby to control the ensuing film thickness. In US patent, No. 5 143 552, M. Moriyama describes coating equipment for spin coating in a temperature and humidity controlled atmosphere. Minimizing water vapour pressure is not an issue, however. In US patent No. 5 391 393, P.D. Maniar describes a method for making a semiconductor device having an anhydrous ferroelectric thin-film in an oxygen-containing ambient. In this case, the thin ferroelectric film is inorganic, viz. PZT (lead zirconate titanate), formed from a sol-gel solution. While stressing the importance of excluding water during the preparation and processing of the sol-gel, this is only with relevance to obtaining prolonged shelf-life by retarding humidity-induced degradation and improving the overall materials characteristics of the ferroelectric material.

There shall now be given some examples of specific embodiments of the method according to the invention.

While the examples given below refer to spin coating, this shall not be construed to imply that the present invention is limited to that technique, since the basic principle of maintaining low water content and controlled water vapour partial pressure applies equally well for all alternative coating techniques of industrial relevance. As regards coating techniques it should be noted that since the present document focuses specifically on ultra-thin films, the lack of explicit references to Langmuir-B lodgett (LB) techniques, capable of depositing monolayer and multilayer films, in the discussion above may appear surprising. While LB techniques are implicitly encompassed by the present invention and have been of great interest and usefulness for basic scientific studies (see, e.g.: C.N. Borca et al., Appl.Phys.Lett., pp. 347-349 (1999)), such films have as yet not been shown to exhibit several of the critical device-related properties of films made by traditional coating techniques. Also, LB deposition technologies are presently not at a stage suitable for industrial scale manufacturing.

The following series of examples illustrating the importance of moisture control and providing explicit data. In the examples, the thin film material used in the coatings was P(VDF-TrFE) 70/30 copolymer, of relevance for certain types of commercial devices. However, similar results were obtained with other copolymers of the same family, with copolymer ratios ranging from 55/45 to 83/17. In each case, the co-polymer was dissolved in a solvent (specified in each case below) and subsequently applied by spin coating (3800 r.p.m. for 2 min.). The temperature was 20°C. Unless otherwise stated, the resulting film thickness was from 0.1 to 0.4 µm. Substrates were polished silicon wafers on which had been evaporated aluminium films.

Examples 1,2 and 3 illustrate the importance of controlling the relative humidity in the space above the surface that is to be coated:

### Example 1

6 % (w/v) 70/30 copolymer in DMF:
a) Relative humidity 45%:
   Result: Incoherent coverage of the surface.
b) Relative humidity 2%:
   Result: Pinhole free uniform films.

### Example 2

6 % (w/v) 70/30 copolymer in NMP:
a) Relative humidity 45%:
   Result: Incoherent coverage of the surface.
b) Relative humidity 2%:
   Result: Pinhole free uniform films.

### Example 3

6 % (w/v) 70/30 copolymer in DMSO:
a) Relative humidity 45 %:
   Result: Incoherent coverage of the surface.
b) Relative humidity 2 %:
   Result: Pinhole free uniform films.

The next example (Example 4) illustrates, in the case of a hygroscopic solvent, the importance of strict moisture control in the materials used in the coating process. Here, one may note that a relative humidity of 45% in the air above the surface could be tolerated, but this was contingent upon completion of the coating process in a time span too short for the solution to adsorb any significant moisture from the ambient. Thus, in order to ensure maximum reliability and reproducibility in the coating process, the water vapour pressure above the receiving surface should always be maintained as low as possible.

### Example 4

4 % (w/v) 70/30 copolymer in cyclohexanone, spin coated at 2000 rpm and under relative humidity 45%:
a) The cyclohexanone was used as received, i.e. no specific efforts had been made to remove water prior to the coating step:
   Result: Films that are 1000 Å thick but full of pinholes.
b) Prior to the coating step, water absorbed in the cyclohexanone had been carefully removed by distillation:
   Result: Pinhole free films that are 1000 Å thick.

It should be noted that the film thickness in all the examples was less or even considerably less than 0.5 µm. Much thicker films than this, typically in the range of several µm, can be fabricated without quality impairing blemishes without paying attention to humidity content of the processing environment. However, films of this thickness is of little interest of fabricating thin-film electronic devices such as the thin-film ferroelectric memories envisaged by the inventors in the introduction of the application. It is indeed stated, that the film thickness shall be well below 1 µm, preferably as low as 0.1 µm and less.

The method according to the invention can be carried out as batch or continuous processes, for instance in a reel-to-reel operation, either in a clean room or a manufacturing cubicle. The relative humidity in a typical clean room atmosphere is usually given as 40%. A number of experiments carried out by the inventors with candidate thin-film materials as given above, show that thin films of these materials could be deposited in the sub-micron range at a relative humidity of 30%, but this value should also be considered in relation to the actual water content in the thin-film material, which typically would vary between 4 and 10% relative weight/volume. By using an absolute water-free thin-film material, the relative humidity could be higher, approaching 45% r.h. This, however, depends on the particular material used. It should also be observed that the liquid phase tends to absorb humidity from the surrounding atmosphere during the processing and this means that the water content of the material in the liquid phase will increase during the processing. It is hence advantageous that the deposition takes place in as short time as possible.

Finally it should be noted that 100% r.h. at 25°C is 3200 P. This implies that the partial pressure for 40% r.h. is 1280 Pa, which should be considered as upper limit at least for this temperature. There are, however, indications that higher humidities in absolute terms could be acceptable at considerably higher processing temperatures, for instance in excess of 50°C. As the experiments of the inventors already indicate, it seems primarily to be the relative humidity which is of concern, provided that the initial water content of the thin-film material and the processing time are taken into account.

## Claims

1. A method for preparing ultra-thin films of carbon-containing materials, particularly thin films of polymer materials, wherein the films have a thickness of 0.5 µm or less, wherein the films are formed by a depositing of the materials from a liquid phase onto a solid surface, wherein the liquid phase is formed by the material in the molten state or dissolved in a solvent, wherein the deposition takes place in an enclosure, the enclosure particularly being a clean room or a closed cubicle in a manufacturing installation, wherein the materials are capable of exhibiting ferroelectric and/or electret properties upon a suitable post-deposition processing, and wherein the method is **characterized by** maintaining a total humidity content in the enclosure corresponding to a relative humidity of less than 50% in a volume of air equal to the volume of the enclosure and the air being at the pressure of one atmosphere by excluding and/or removing water and water vapour from at least one of the following: the liquid phase, the solid surface, and a free volume of the enclosure above the solid surface during the deposition and the post-deposition processing, the maintenance of the total humidity content at any time during the deposition and the deposition processing taking into account the actual water vapour pressure in the enclosure as well as the water content of the liquid phase.

2. A method according to claim 1, **characterized by** removing water from said solid surface prior to the deposition by one or more of the following processes, viz. exposure to elevated temperatures, ion bombardment and flushing with a hygroscopic liquid or gas, the process or processes taking place in an atmosphere having a relative humidity of less than 35% or in vacuum.

3. A method according to claim 1, **characterized by** evacuating the enclosure prior to the deposition.

4. A method according to claim 1, **characterized by** creating a controlled atmosphere having less than 35% relative humidity or moisture-free atmosphere in the enclosure prior to the deposition.

5. A method according to claim 4, **characterized by** the controlled atmosphere containing one or more gases being selected among, but not limited thereto, viz. noble gases, nitrogen, and carbon monoxide.

6. A method according to claim 4, **characterized by** the controlled atmosphere being dehumified air.

7. A method according to claim 1, **characterized by** the partial water vapour pressure at solid surface being maintained below 1280 Pa and preferably below 960 Pa during the deposition and the post-deposition processing.

8. A method according to claim 1, **characterized by** said carbon-containing materials, being selected among one of the following materials, but not limited thereto, viz. oligomers, polymers, copolymers of vinylidene fluorides (VF, VDF, TrFE and TFE), vinylidene chlorides and vinylidene cyanides, ethylene, ethylene terephtalate, methylmethacrylate, acrylonitrile, vinyl alcohol, ureas, thioureas, urethanes, nylons, polycarbonate, and/or blends thereof.

9. A method according to claim 1, **characterized by** deposition being performed by one of the following processes, but not limited thereto, viz. spin coating, meniscus coating, dip coating, doctor blading and spray coating.

## Patentansprüche

1. Verfahren zur Herstellung von ultradünnen Folien aus kohlenstoffhaltenigen Materialien, insbesondere dünnen Folien aus Polymermaterialien, wobei die Folien eine Dicke von 0,5 µm oder weniger aufweisen, wobei die Folien durch eine Abscheidung der Materialien aus einer flüssigen Phase auf eine feste Oberfläche gebildet werden, wobei die flüssige Phase durch das Material in geschmolzenem Zustand oder gelöst in einem Lösungsmittel gebildet wird, wobei die Abscheidung in einem geschlossenen Raum stattfindet, wobei der geschlossene Raum insbesondere ein sauberer Raum oder eine geschlossene Zelle in einer Fabrikationsanlage ist, wobei die Materialien ferroelektrische und/oder Elektret-Eigenschaften durch eine geeignete Nachabscheidungsverarbeitung zeigen können und wobei das Verfahren **dadurch gekennzeichnet ist, dass** ein Gesamtfeuchtigkeitsgehalt im Gehäuse beibehalten wird, der einer relativen Feuchtigkeit von weniger als 50% in einem dem Volumen des Gehäuses gleichen Luftvolumen entspricht, und die Luft bei einem Druck von einer Atmosphäre durch Ausschluss und/oder Entfernen von Wasser und Wasserdampf von mindestens einem der Folgenden vorliegt: der flüssigen Phase, der festen Oberfläche und einem freien Volumen des Gehäuses über der festen Oberfläche während der Abscheidung und der Nachabscheidungsverarbeitung, wobei das Beibehalten des Gesamtfeuchtigkeitsgehalts zu jedem beliebigen Zeitpunkt während der Abscheidung und der Abscheidungsverarbeitung den genauen Wasserdampfdruck im Gehäuse sowie den Wassergehalt der flüssigen Phase berücksichtigt.

2. Verfahren nach Anspruch 1, **dadurch gekennzeichnet, dass** vor der Abscheidung Wasser von der festen Oberfläche durch eines oder mehrere der folgenden Verfahren, d. h. Aussetzen erhöhten Temperaturen, Ionenbeschuss und Spülen mit einer hygroskopen Flüssigkeit oder einem hygroskopen Gas entfernt wird, wobei das Verfahren in einer Atmosphäre mit einer relativen Luftfeuchtigkeit von weniger als 35% oder in Vakuum stattfindet.

3. Verfahren nach Anspruch 1, **dadurch gekennzeichnet, dass** das Gehäuse vor der Abscheidung evakuiert wird.

4. Verfahren nach Anspruch 1, **dadurch gekennzeichnet, dass** vor der Abscheidung eine regulierte Atmosphäre mit weniger als 35% relativer Luftfeuchtigkeit oder eine feuchtigkeitsfreie Atmosphäre im Gehäuse gebildet wird.

5. Verfahren nach Anspruch 4, **dadurch gekennzeichnet, dass** die regulierte Atmosphäre ein oder mehrere Gase, d. h. ausgewählt aus Edelgasen, Stickstoff und Kohlenmonoxid, enthält, jedoch nicht darauf beschränkt ist.

6. Verfahren nach Anspruch 4, **dadurch gekennzeichnet, dass** die regulierte Atmosphäre entfeuchtete Luft ist.

7. Verfahren nach Anspruch 1, **dadurch gekennzeichnet, dass** der Wasserdampfpartialdruck auf der festen Oberfläche unter 1280 Pa und vorzugsweise unter 960 Pa während der Abscheidung und der Nachabscheidungsverarbeitung gehalten wird.

8. Verfahren nach Anspruch 1, **dadurch gekennzeichnet, dass** die kohlenstoffhaltigen Materialien aus einem der folgenden Materialien, d. h. Oligomere, Polymeren, Copolymeren von Vinylidenfluoriden (VF, VDF, TrFE und TFE), Vinylidenchloriden und Vinylidencyaniden, Ethylen, Ethylenterephthalat, Methylmethacrylat, Acrylnitril, Vinylalkohol, Hamstoffen, Thioharnstoffen, Urethanen, Nylons, Polycarbonat und/oder Gemischen davon ausgewählt sind, jedoch nicht darauf beschränkt sind.

9. Verfahren nach Anspruch 1, **dadurch gekennzeichnet, dass** die Abscheidung durch eines der folgenden Verfahren, d. h. Drehbeschichtung, Meniskusbeschichtung, Tauchbeschichtung, Rakelbeschichtung und Sprühbeschichtung durchgeführt wird, jedoch nicht darauf beschränkt ist.

## Revendications

1. Procédé pour préparer des films ultra-minces en matériaux carbonés, en particulier des films minces de matériaux polymères, dans lequel les films ont une épaisseur de 0,5 µm ou moins, dans lequel les films sont formés par déposition des matériaux, à partir d'une phase liquide, sur une surface solide, dans lequel la phase liquide est formée par le matériau à l'état fondu ou dissous dans un solvant, dans lequel la déposition a lieu dans une enceinte, l'enceinte étant en particulier une salle blanche ou une alcôve fermée dans une installation de fabrication, dans lequel les matériaux sont capables de présenter des propriétés ferroélectriques et/ou d'électret après un traitement de post-déposition convenable, et dans lequel le procédé est **caractérisé par** le maintien d'une teneur en humidité totale dans l'enceinte correspondant à une humidité relative inférieure à 50 % dans un volume d'air égal au volume de l'enceinte, l'air était sous une pression d'une atmosphère par exclusion et/ou élimination de l'eau et de la vapeur d'eau provenant d'au moins l'un des suivants : la phase liquide, la surface solide, et un volume libre de l'enceinte au-dessus de la surface solide durant la déposition et le traitement de post-déposition, le maintien de la teneur en humidité totale à n'importe quel moment durant la déposition, et le traitement de déposition prenant en compte la pression de vapeur d'eau réelle dans l'enceinte ainsi que la teneur en eau de la phase liquide.

2. Procédé selon la revendication 1, **caractérisé par** l'élimination de l'eau provenant de ladite surface solide avant la déposition par l'un ou plusieurs des procédés suivants, à savoir une exposition à des températures élevées, un bombardement ionique et un rinçage avec un gaz ou un liquide hygroscopique, le ou les procédés se déroulant dans une atmosphère ayant une humidité relative inférieure à 35 % ou sous vide.

3. Procédé selon la revendication 1, **caractérisé par** l'évacuation de l'enceinte avant la déposition.

4. Procédé selon la revendication 1, **caractérisé par** la création d'une atmosphère contrôlée ayant une humidité relative inférieure à 35 % ou d'une atmosphère sans humidité dans l'enceinte avant la déposition.

5. Procédé selon la revendication 4, **caractérisé en ce que** l'atmosphère contrôlée contient un ou plusieurs gaz choisis parmi, mais sans s'y limiter, les gaz nobles, l'azote et le monoxyde de carbone.

6. Procédé selon la revendication 4, **caractérisé en ce que** l'atmosphère contrôlée est de l'air déshumidifié.

7. Procédé selon la revendication 1, **caractérisé en ce que** la pression de vapeur d'eau partielle à la surface solide est maintenue à moins de 1280 Pa et de préférence à moins de 960 Pa durant la déposition et le traitement de post-déposition.

8. Procédé selon la revendication 1, **caractérisé en ce que** lesdits matériaux carbonés sont choisis parmi les matériaux suivants, mais sans s'y limiter, à savoir les oligomères, les polymères, les copolymères de fluorures de vinylidène (VF, VDF, TrFE et TFE), de chlorures de vinylidène et de cyanures de vinylidène, d'éthylène, de téréphtalate d'éthylène, de méthacrylate de méthyle, d'acrylonitrile, d'alcool vinylique, d'urées, de thiourées, d'uréthanes, de nylons, de polycarbonate, et/ou leurs mélanges.

9. Procédé selon la revendication 1, **caractérisé en ce que** la déposition est effectuée par l'un des procédés suivants, mais sans s'y limiter, à savoir un revêtement centrifuge, un revêtement au ménisque, un revêtement par immersion, un revêtement à la lame docteur et un revêtement par pulvérisation.
